Europäisches Patentamt

European Patent Office

Office européen des brevets

(11) Numéro de publication: **0 099 272**
A2

# (12) DEMANDE DE BREVET EUROPEEN

(21) Numéro de dépôt: 83400325.3

(22) Date de dépôt: 16.02.83

(51) Int. Cl.³: **H 04 Q 3/62**
**H 04 Q 3/00**

(30) Priorité: 07.07.82 FR 8211898

(43) Date de publication de la demande:
25.01.84 Bulletin 84/4

(84) Etats contractants désignés:
AT BE DE FR GB IT LU NL SE

(71) Demandeur: COMPAGNIE GENERALE DE
CONSTRUCTIONS TELEPHONIQUES Société Anonyme
dite:
251, rue de Vaugirard
F-75740 Paris Cedex 15(FR)

(72) Inventeur: Meunier, Bernard Marie André
1 rue la Pérouse
F-78150 Le Chesnay(FR)

(74) Mandataire: Loraux, Jean-Claude Georges
251, rue de Vaugirard
F-75740 Paris Cédex 15(FR)

(54) Circuit de boucle pour ligne téléphonique.

(57) L'invention concerne un circuit de boucle pour ligne téléphonique et, plus particulièrement, un circuit de terminaison d'une ligne réseau dans une installation téléphonique privée.

Ce circuit comprend un transistor (T1) dont une première électrode est connectée directement à l'un des fils de la ligne, dont une seconde électrode est connectée à l'autre des fils de la ligne via une résistance (R1, R4) et dont l'électrode de commande est connectée par une résistance (R2) à l'un des fils de la ligne et par un condensateur (C1) à l'autre fil, un interrupteur (SC2) pour bloquer sur commande ce transistor, et un autre interrupteur (SC1) pour déconnecter du reste du circuit l'une des armatures du condensateur (C1).

L'invention est applicable dans les installations téléphoniques privées.

EP 0 099 272 A2

Croydon Printing Company Ltd.

./...

1

## Circuit de boucle pour ligne téléphonique.

La présente invention a pour objet un circuit de boucle pour ligne téléphonique et, plus particulièrement, un circuit de terminaison d'une ligne réseau dans une installation téléphonique privée.

Dans une installation privée, lors d'une communication avec le réseau public, que cette communication soit entrante ou sortante, il est nécessaire de boucler la ligne réseau utilisée, c'est-à-dire d'établir la continuité pour le courant continu entre les deux fils de la ligne. En outre, notamment dans le cas d'un appel sortant, la boucle doit pouvoir être ouverte sur commande, pour l'envoi d'impulsions de numérotation.

Une solution connue consiste à prévoir un circuit de bouclage de la ligne connecté en parallèle avec celle-ci, la voie de communication avec le poste intérieur étant découplée par un transformateur séparant en courant continu l'installation privée du réseau public.

Ce circuit de bouclage parallèle ne doit pas affaiblir les courants de parole. Il doit donc avoir les caractéristiques d'une inductance. Pour obtenir un tel circuit tout en évitant d'utiliser des bobinages qui sont d'un prix de revient élevé et d'un encombrement important, un procédé connu consiste à utiliser un dipôle gyrateur. Un tel dipôle est décrit notamment dans le brevet français n° 71 25013 déposé le 8 juillet 1971. Ce dipôle comprend un transistor dont le collecteur est connecté

2

directement à une première borne du dipôle, dont l'émetteur est connecté à l'autre borne du dipôle par une résistance, et dont l'électrode de base est connectée à la première borne par une résistance et à l'autre borne du dipôle par l'intermédiaire d'un condensateur. Aux fréquences vocales, par un dimensionnement adéquat, ce dipôle est équivalent à une inductance.

Le brevet français n° 73 40850 déposé le 16 novembre 1973 décrit notamment un circuit de bouclage de ligne utilisant un dipôle similaire dans lequel la tension aux bornes du condensateur est maintenue sensiblement constante. De ce fait, le transistor fonctionnant en classe A ne laisse passer qu'un courant continu de valeur constante. Une telle solution n'est pas toujours applicable, notamment lorsque le courant fourni par le central public fait déjà l'objet d'une régulation.

L'invention concerne un circuit de boucle à gyrateur dans lequel la boucle présente aux courants à fréquences vocales une impédance élevée et quasi constante. Dans ce cas la charge du condensateur du gyrateur dépend de la tension de la ligne. Or, lorsque la boucle est ouverte, la tension de la ligne varie. Il importe par conséquent de préserver le condensateur de telles variations.

La présente invention concerne donc aussi un circuit du type précédemment défini dans lequel la tension aux bornes du condensateur est préservée des fluctuations de la tension de la ligne en boucle ouverte.

Le circuit de boucle de l'invention est caractérisé par le fait qu'un interrupteur est aménagé pour bloquer sur commande le transistor et qu'un autre interrupteur est aménagé pour déconnecter du reste du circuit l'une des armatures du condensateur.

Une autre caractéristique du circuit de boucle de l'invention réside dans le fait que le transistor du gyrateur est réalisé selon la technologie V-MOS.

Une autre caractéristique du circuit de boucle de l'invention réside dans le fait que le premier

3

interrupteur est un optocoupleur comprenant notamment un phototransistor dont le circuit émetteur-collecteur est connecté entre l'électrode de commande du transistor et le fil de la ligne qui est connecté à une électrode du transistor par l'intermédiaire d'une résistance.

Une autre caractéristique du circuit de boucle de l'invention réside dans le fait que le second interrupteur est un interrupteur bidirectionnel réalisé à l'aide de deux optocoupleurs dont les transistors sont montés tête-bêche, en série avec le condensateur.

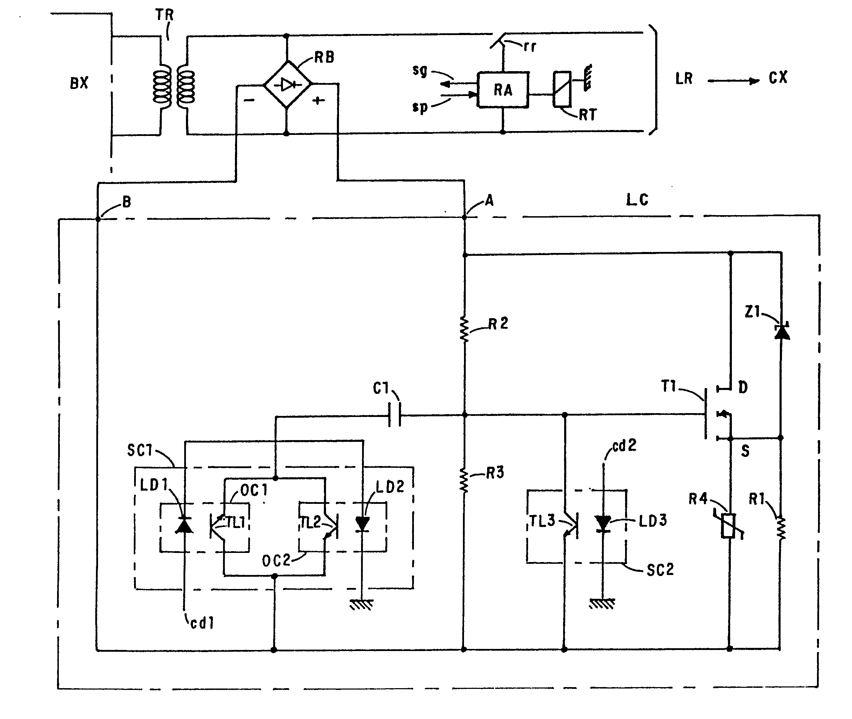

Les différents objets et caractéristiques de l'invention seront maintenant détaillés dans la description qui va suivre, donnée à titre d'exemple non limitatif, en se reportant à la figure annexée qui représente un exemple de réalisation d'un circuit de boucle conçu conformément à la présente invention.

Le circuit de boucle LC de la figure annexée est connecté en parallèle sur les fils d'une ligne réseau LR reliant un central téléphonique privé BX à un central téléphonique public CX via un transformateur de découplage TR. Au repos, la ligne LR est connectée à un circuit de réception d'appel RA par le contact de repos rt d'un relais RT. A la réception du courant alternatif d'appel, le circuit RA produit un signal sq. Quand il est répondu à l'appel, l'appareil de la personne qui répond est connecté par le central privé BX au transformateur TR, et un signal de commande sp appliqué au circuit de réception d'appel RA excite le relais RT.

Le contact rt fonctionne et connecte la ligne réseau LR au transformateur TR pour établir le trajet de conversation. La ligne réseau LR est bouclée sur le circuit de boucle LC.

Lors d'un appel départ, le relais RT est excité de la même façon.

Le circuit de boucle LC est connecté à la ligne réseau LR par l'intermédiaire d'un pont redresseur RB imposant toujours le même sens au courant dans le circuit de boucle LC quelle que soit la polarité de la tension de la ligne réseau LR. Ainsi les sorties positive et négative du pont RB sont respectivement connectées aux entrées A et B du circuit de boucle LC.

Ce circuit de boucle comprend notamment un dipôle gyrateur constitué d'un transistor T1 du type V-MOS, d'un condensateur C1 et de résistances R1 à R3.

L'électrode de drain du transistor T1 est connectée à l'entrée A du circuit de boucle LC. L'électrode de source de ce transistor est connectée à l'entrée B du circuit de boucle LC par l'intermédiaire de la résistance R1. L'électrode de commande du transistor T1 est connectée au point commun aux résistances R2 et R3 connectées en série entre les entrées A et B.

Une première armature du condensateur C1 est connectée à l'électrode de commande du transistor T1, l'autre armature de ce condensateur étant connectée à l'électrode de source de ce transistor par l'intermédiaire d'un interrupteur bidirectionnel SC1.

L'interrupteur SC1 comprend un premier opto-coupleur OC1 constitué d'une diode électroluminescente LD1 et d'un phototransistor TL1, et un second optocoupleur OC2 constitué d'une diode électroluminescente LD2 et d'un phototransistor TL2.

L'émetteur du phototransistor TL1 et le collecteur du phototransistor TL2 sont connectés à la seconde armature du condensateur C1. Le collecteur du phototransistor TL1 et l'émetteur du phototransistor TL2 sont connectés à l'entrée B du circuit de boucle LC.

L'anode de la diode électroluminescente LD1 est connectée à une source de signaux de commande cd1 non représentée. La cathode de cette diode est connectée à l'anode de la diode LD2. La cathode de cette dernière est connectée au potentiel de référence, la masse par exemple.

Le circuit de boucle LC comprend également un interrupteur SC2 connecté entre l'électrode de commande du transistor T1 et l'entrée B du circuit. Cet interrupteur SC2 est, selon l'exemple choisi, un optocoupleur comprenant un phototransistor TL3 dont l'émetteur est connecté à l'entrée B du circuit de boucle LC et dont le collecteur est connecté à l'électrode de commande du transistor T1, et une diode électroluminescente LD3 dont la cathode est connectée à la masse et dont l'anode reçoit des signaux de commande cd2.

Le circuit de boucle LC comprend en outre une thermistance de régulation R4 connectée en parallèle avec la résistance R1, et une diode de protection à effet Zener Z1 dont l'anode est connectée à l'électrode de source du transistor T1 et dont la cathode est connectée à l'entrée A.

On décrira maintenant le fonctionnement du circuit de boucle LC.

Lorsque la ligne LR doit être bouclée, un signal de commande cd2 de niveau 0 est fourni à l'anode de la diode LD3 qui se bloque. L'interrupteur SC2 s'ouvre et le transistor T1 conduit. Simultanément, l'interrupteur SC1 est fermé par le signal de commande cd1 au niveau 1. Grâce à la présence de deux transistors tête-bêche, le condensateur C1 est inclus dans le circuit pour les deux sens du courant.

Le dipôle gyrateur T1-C1-R1-R2 fonctionne alors normalement : il assure le bouclage en continu de la ligne LR. En outre, les signaux de parole transmis sur cette ligne ne sont pas affaiblis par le dipôle qui est équivalent en alternatif à une inductance de valeur élevée.

Lors d'un appel sortant, le circuit de boucle permet la transmission d'impulsions sous la forme d'ouvertures de la boucle.

Chaque ouverture de la boucle est obtenue par l'envoi d'un signal de commande cd2 de niveau 1. La diode LD3 est rendue passante et l'interrupteur SC2 se ferme et connecte l'électrode de commande du transistor T1 à l'entrée B du circuit de boucle LC. Le transistor T1 se bloque.

Simultanément on commande l'ouverture de l'interrupteur SC1 par l'envoi d'un signal de commande cd1 de niveau 0. La deuxième armature du condensateur C1 est alors isolée du reste du circuit. De cette façon, le

6

condensateur Cl conserve sa charge durant l'impulsion. Après l'impulsion, il est reconnecté au transistor Tl et la boucle est restaurée sans perturbation.

Le circuit de boucle LC permet donc bien de boucler la ligne téléphonique LR sans affaiblir les courants de parole. Il permet également la transmission d'impulsions (numérotation, par exemple) sous la forme d'ouvertures de boucle.

Il est bien évident que la description qui précède n'a été fournie qu'à titre d'exemple non limitatif et que de nombreuses variantes peuvent être envisagées sans sortir pour autant du cadre de l'invention.

7

## REVENDICATIONS

1. Circuit de boucle pour ligne téléphonique comprenant un transistor dont une première électrode est connectée directement à l'un des fils de la ligne, dont une seconde électrode est connectée à l'autre des fils de la ligne par l'intermédiaire d'une résistance, et dont l'électrode de commande est connectée par une résistance à l'un des fils de la ligne, et par un condensateur à l'autre fil de la ligne, caractérisé par le fait qu'un interrupteur (SC2) est aménagé pour bloquer sur commande le transistor (T1), et qu'un autre interrupteur (SC1) est aménagé pour déconnecter du reste du circuit l'une des armatures du condensateur (C1).

2. Circuit de boucle tel que défini en 1, caractérisé par le fait que le transistor (T1) est réalisé selon la technologie V-MOS.

3. Circuit de boucle tel que défini en 1, caractérisé par le fait que l'interrupteur (SC2) est un optocoupleur comprenant notamment un phototransistor (TL3) dont le circuit émetteur-collecteur est connecté entre l'électrode de commande du transistor (T1) et l'autre fil de la ligne (LR).

4. Circuit de boucle tel que défini en 1, caractérisé par le fait que l'autre interrupteur (SC1) est un interrupteur bidirectionnel réalisé à l'aide de deux optocoupleurs (OC1, OC2) dont les phototransistors (TL1, TL2) sont montés tête-bêche, en série avec le condensateur (C1).

ORIGINAL
Par procuration

J.-C. LORAUX

ORIGINAL
Par procuration

J.-C. LOBAUX